# EUROPEAN PATENT APPLICATION

(11) **EP 3 006 797 A1**
(43) Date of publication of application: **13.04.2016**
(21) Application number: 15188377.4
(22) Date of filing: 05.10.2015
(51) Int. Cl.: F16K 31/60, E03C 1/04

(54) **TAP WITH BLOCKING MEMBERS TO LIMIT ROTATION OF A TAP HANDLE**

(30) Priority: 06.10.2014 GB 201417632
(71) Applicant: Mechline Developments Limited, Milton Keynes MK11 3ER (GB)
(72) Inventor: SAGE-PASSANT, Peter, Milton Keynes, Buckinghamshire/Kiln Farm MK11 3ER (GB)
(74) Representative: Morris, Jonathan Paul

(57) **Abstract**

The present invention relates to a tap (1). The tap (1) includes a body (3) arranged for connection to at least one water supply pipe (9,11); a valve (31) including a first part (33), which is fixed to the body (3) and a second part (35) arranged for limited rotational movement with respect to the first part (33); and a handle (15,17) fixed for rotation with the second part (33) of the valve, said handle (15,17) including a housing (19) mounted over at least a part of the valve (31), said housing (19) including first and second blocking members (37a,37b); and the body (3), and/or a part of the tap fixed to the body, includes third and fourth blocking members (41a,41b); wherein the first blocking member (37a) is arranged to engage with the third blocking member (41a) to limit rotational movement of the handle (19) in a first rotational direction; the first blocking member (37a) is arranged to engage the fourth blocking member (41b) to limit rotational movement of the handle (19) in the second rotational direction; the second blocking member (37b) is arranged to engage with one of the third and fourth blocking members (41a,41b) to limit rotational movement of the handle (19) in one of the first and second rotational directions; and wherein the first, second, third and fourth blocking members (37a,37b,41a,41b) are located within the housing (19)

## Description

The present invention relates to a tap and a water supply system including the tap.

Taps are provided in water systems to control water dispensing. One type of tap is a lever operated tap. Lever taps can be provided as individual taps, for example for a hot or a cold supply, or as a mixer tap for hot and cold water blend. Mixer taps are available, which include a first lever handle for the cold water supply and a second lever handle for the hot water supply; and a single lever handle which controls the flow rate and hot / cold water blending.

In general, a lever operated tap includes: a tap body; which is connected to at least one water pipe; a spout; a tap valve (sometimes referred to as a tap cartridge), which controls the flow of water to the spout; and a handle which is connected to the tap valve. The valve includes a first part, which is fixed to the tap body and a second part, which is connected to the handle. The second part is arranged for limited rotational movement with respect to the first part. Operating the handle causes the second part to rotate with respect to the first part, thereby opening and closing the valve.

In a lever tap, the valve typically moves from a fully closed position to a fully open position in less than 360 degrees of rotation. Quarter, or third, turn valves are frequently used, which move from the fully closed position to the fully open position by rotating the handle through 90 or 120 degrees respectively.

With this arrangement, the load applied by the user to the handle is transmitted directly to the second part of the valve. When the valve is fully opened, or fully closed, it is the interaction of the first and second parts of the valve which arrests further movement of the handle.

A problem with this arrangement is that it is prone to breaking when the user applies a large load to the handle. When the handle reaches the fully open and/or fully closed position, continued application of force by the user may cause the connection between the handle and the first part of the valve to sheer, and in some extreme cases, may cause the valve to fail.

For mixer taps having a single lever, the arrangement is slightly different. The lever is arranged to rotate about two axes: a first axis (typically a vertical axis) to control the blend of hot and cold water; and second axis which is substantially orthogonal to the first axis (typically a horizontal axis) to control the flow rate. However the design is similarly prone to breaking when a user applies a large load to the handle in at least one of the rotational directions.

In contexts where hygiene is a particular concern, such as in catering and medical facilities, the user may operate the tap without using a hand, for example a user may push the lever with his/her elbow, or some other part of his/her body. Operating the tap handle without using a hand can cause the lever tap to break more easily since the force imparted is more difficult to control and the turning moment generated may be larger than intended. In the catering industry, a user may operate the tap during a busy service when carrying items. Rather than placing the items down and then operating the tap by hand, the user is often tempted to operate the tap while carrying the load with some other part of his/her body. The user may be unbalanced, or may be concentrating on the carried items, and may rotate the handle beyond its designed limit, causing the tap to break.

Similar problems can occur in other contexts.

Accordingly the invention seeks to provide a tap, and a water system including the tap, that addresses at least one of the above-mentioned problems.

According to one aspect of the invention, there is provided a tap, including: a body arranged for connection to at least one water supply pipe; and a valve including a first part, which is fixed to the body and a second part arranged for limited rotational movement with respect to the first part. The valve controls the flow of water to a spout. A handle is fixed for rotation with the second part of the valve, said handle including a housing mounted over at least a part of the valve.

Advantageous optional features of preferred embodiments are recited in the dependent claims and are further described below.

The housing includes a first blocking member.

The housing includes a second blocking member.

The body, and/or a part of the tap fixed to the body, includes a third blocking member.

The body, and/or a part of the tap fixed to the body, includes a fourth blocking member.

The first blocking member is arranged to engage with the third blocking member to limit rotational movement of the handle in a first rotational direction.

The first blocking member is arranged to engage the fourth blocking member to limit rotational movement of the handle in the second rotational direction.

The second blocking member is arranged to engage with one of the third and fourth blocking members to limit rotational movement of the handle in one of the first and second rotational directions.

The first, second, third and fourth blocking members are located within the housing.

The blocking members prevent the user from overloading the connection between the handle and the valve in the first and second rotational directions. This significantly reduces the possibility of the tap breaking when loading it. Using at least four blocking members, with at least two located on the handle and at least two located on the body, and/or a part of the tap fixed to the body, provides a very robust arrangement. Furthermore, since the blocking members are located within the handle housing it is not possible for a user to accidently catch a finger or cuff on the blocking members, and the tap designer is not limited in the external styling options available.

In some embodiments the first rotational direction is the valve closing direction and the second rotational direction is the valve opening direction.

Advantageously the housing blocking members are arranged along a pitch circle, and the blocking members are spaced apart circumferentially. The angle subtended between a pair of blocking members and a point on a central longitudinal axis passing though the valve is preferably less than or equal to 120°, preferably less than or equal to 110°, more preferably less than or equal to 100°, and more preferably still less than or equal to 90°.

Advantageously the blocking members located on the body, and/or a part of the tap fixed to the body, are arranged along a pitch circle, and the blocking members are spaced apart circumferentially. The angle subtended between a pair of blocking members and a point on a central longitudinal axis passing though the valve is preferably less than or equal to 120°, preferably less than or equal to 110°, more preferably less than or equal to 100°, and more preferably still less than or equal to 90°.

Advantageously the housing blocking members and the body blocking members are arranged along substantially the same pitch circle.

In some embodiments the third blocking member is arranged to block further movement of the handle at, or just before, at least one of the valve's fully open position and the valve's fully closed position. The first blocking member engages the third blocking member, at, or just before, at least one of the valve's fully open position and the valve's fully closed position.

In some embodiments the fourth blocking member is arranged to block further movement of the handle at, or just before, at least one of the valve's fully open position and the valve's fully closed position. The first blocking member engages the fourth blocking member, at, or just before, at least one of the valve's fully open position and the valve's fully closed position.

In some embodiments the second blocking member is arranged to block further movement of the handle at, or just before, at least one of the valve's fully open position and the valve's fully closed position. The second blocking member engages with at least one of the third and fourth blocking members, at, or just before, at least one of the valve's fully open position and the valve's fully closed position.

Having the blocking members located such that they engage at, or just before, the fully opened position for the valve and/or the fully closed position for the valve ensures that valve can be used through substantially its full range, while still being protected from breaking.

Advantageously the blocking members are arranged to allow the handle to rotate through an angle of less than or equal to 180°, preferably less than or equal to 160°, more preferably less than or equal to 140°, more preferably still less than or equal to 120°, and more preferably still less than or equal to 100°.

Advantageously the housing can include at least one additional blocking member.

Advantageously the body, and/or a part of the tap fixed to the body, can include at least one additional blocking member.

Advantageously the housing includes at least one wall, and the or each housing blocking member projects inwardly from the at least one wall. Typically the housing includes a plurality of walls. The housing includes at least one side wall. In some embodiments the or each housing blocking member projects inwardly from the at least one side wall. The housing can include at least one end wall. The housing can have a substantially cylindrical form, which is substantially closed at one end by an end wall, and open at the other end. The housing can have a more polygonal form, which is substantially closed at one end and open at the other end.

The handle typically includes a lever portion which protrudes outwardly from the housing.

Advantageously the or each housing blocking member is in the form of a protruding member, such as a rib.

Advantageously the or each housing blocking member is formed integrally with the handle housing. In preferred embodiments, the handle comprises a moulded component and the housing blocking members are integrally moulded into the housing.

Advantageously the or each body blocking member is in the form of an upstanding protrusion, such as a lug. Preferably the or each lug is machined into the body, or a component fixed thereto.

In some embodiments, the tap is in the form a single tap. In these embodiments the body is arranged for attachment to a single water pipe, for example, a hot or a cold water pipe. In some preferred embodiments the tap is in the form of a mixer tap. In these embodiments the body is arranged for attachment to a plurality of water pipes, for example hot and cold water pipes.

In some embodiments the tap includes a second valve, said second valve having a first part fixed to the body and a second part that is arranged for limited rotational movement with respect to the first part. The second valve controls the flow of water to the spout.

In some embodiments the tap includes a second handle. The second handle is operatively connected to the second part of the second valve, and is arranged to move the second part from a valve closed position to a valve open position.

A similar blocking arrangement is provided for the second handle. The second handle includes first and second blocking members. The body, and/or a part of the tap fixed to the body, includes third and fourth blocking members. The first blocking member is arranged to engage with the third blocking member to limit rotational movement of the second handle in a first rotational direction. The first blocking member is arranged to engage the fourth blocking member to limit rotational movement of the second handle in the second rotational direction. The second blocking member is arranged to engage with one of the third and fourth blocking members to limit rotational movement of the second handle in one of the first and second rotational directions. The first, second, third and fourth blocking members are located within the second housing.

In some embodiments the handle and valve arrangement is configured to control the flow rate only of water dispensed from the tap.

In some embodiments the handle and valve arrangement is configured to control the flow rate of water dispensed from the tap, and the blending of hot and cold water.

According to another aspect of the invention there is provided a water supply system including at least one tap according to any configuration described herein.

According to another aspect of the invention, there is provided a tap, including: a body arranged for connection to at least one water supply pipe; and a valve including a first part, which is fixed to the body and a second part arranged for limited rotational movement with respect to the first part. The valve controls the flow of water to a spout. A handle is fixed for rotation with the second part of the valve, said handle including a housing mounted over at least a part of the valve.

Embodiments of the invention will now be described by way of example only with reference to the drawings, wherein:
Figure 1 is an isometric view of a tap according to a first embodiment of the invention;
Figure 2 is a side view of the tap of Figure 1;
Figure 3 is a plan view of the tap of Figure 1, with the handle being shown in section (see section line A-A n in Figure 2), said handle being in a closed position;
Figure 4 is a plan view of the tap of Figure 1, with the handle being shown in the section (see section line A-A in Figure 2), said handle being in an open position; and
Figure 5 is an enlarged view of section A-A from Figure 2, which shows the handle in the closed and open positions, and the relative positions of handle ribs with respect to body lugs in the closed and open positions.

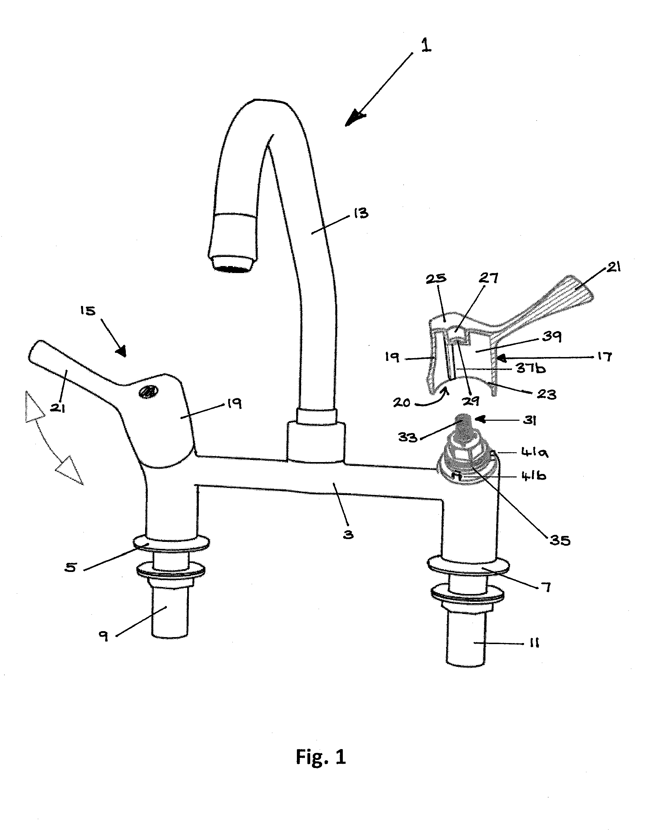

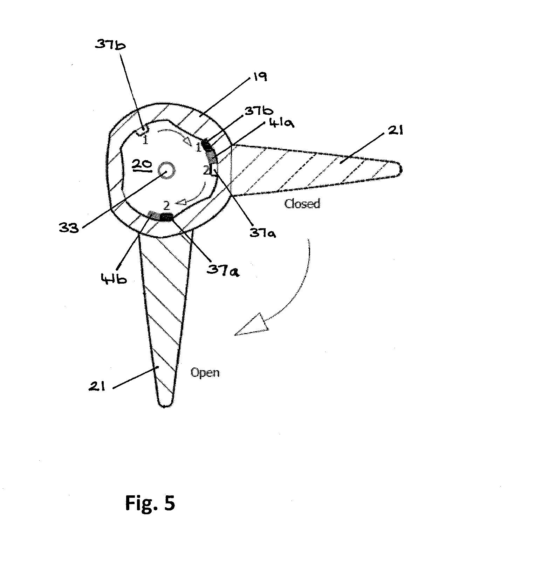

A first embodiment of the invention is shown in Figures 1 to 5. The first embodiment comprises a mixer tap 1 including a tap body 3 having hot and cold water pipe connectors 5,7, which are arranged for fluid connection with hot and cold water pipes 9,11 respectively; a spout 13; a first operating handle 15 for controlling the flow of hot water; and a second operating second handle 17 for controlling the flow of cold water.

Each of the first and second handles 15,17 includes a housing 19 and lever 21. The lever 21 is the part of the tap that is gripped by the user when operating the tap 1. The housing 19 is defined by at least one wall. Typically the housing 19 includes at least one side wall 23 and a top wall 25, for example may have a substantially cylindrical outer form. It will be appreciated by the skilled person that many different shapes / styles of housing 19 are possible. The housing 19 includes an internal cavity 20, and is open towards its lower end.

A recess 27 is formed in the top wall 25, and a through hole 29 is formed in the recessed portion 27. A screw element (not shown) connects the handle 15,17 to a valve 31, which is sometimes referred to as a tap cartridge. The valve 31 controls the flow of water to the spout 13. The valve 31 includes a first part 33 that is fixed to the tap body 3 and a second part 35 that is arranged to rotate relative to the first part 33, from a valve open position to a valve closed position. The housing 19 is mounted over the second part 35 of the valve. The screw element connects the handle 15,17 to the second part 35 of the valve, the arrangement being such that the handle 15,17 rotates with the second part of the valve 35.

Typically the second part 35 is arranged to rotate through an angle of around 90° from the fully closed to the fully open position. It will be appreciated by the skilled person, that the valve may be arranged to rotate through a larger or smaller angle from the fully closed to the fully open position. Typically the angle is greater than 60° and less than 180°. 90° (quarter turn) or 120° (third turn) valves are typically used.

Each handle 15,17 includes at least one internal rib 37a, and preferably a plurality of internal ribs 37a,37b. The or each rib 37a,37b provides a mechanical blocking function. The or each internal rib 37a,37b is preferably formed on the at least one side wall 23 of the housing. The or each internal rib 37a,37b is located within the housing 19 and is arranged to protrude inwardly from an internal surface 39 of the side wall 23. Each rib 37a,37b is preferably integrally formed with the handle 15,17, for example, at least part of the handle 15,17 can comprise a moulded component.

The tap body 3 includes at least one lug 41 a, and preferably a plurality of lugs 41a,41b. The or each lug 41a,41b is located within the housing 19, and provides a mechanical blocking function. The lugs 41 are preferably machined into the tap body 3, however they can be formed in any suitable way. In some arrangements, the lugs 41 can be formed on the first part 33 of the valve.

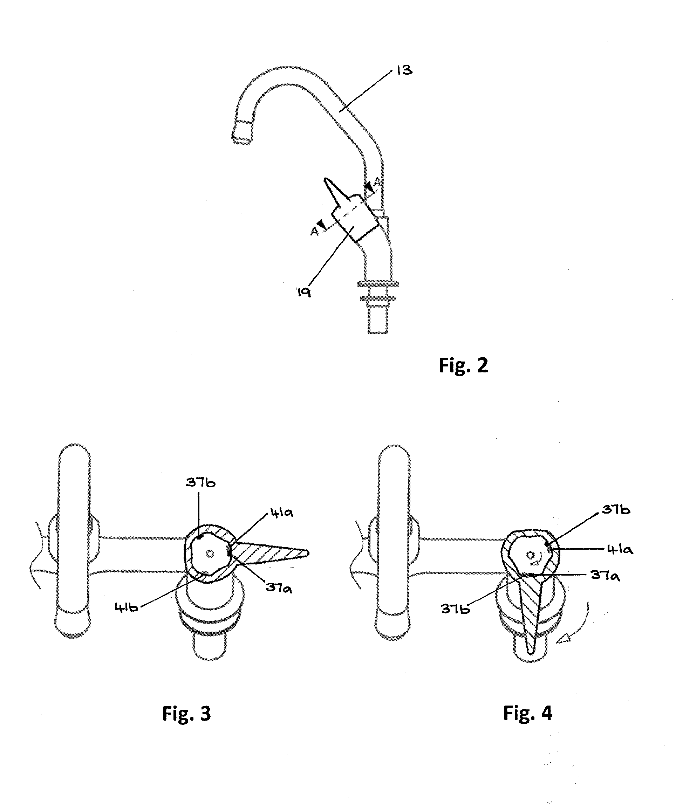

The rib 37a is arranged to engage with at least one of the lugs 41a,41b in order to limit rotational movement of the handle 15,17, in at least one rotational direction. In Figures 3 to 5 first and second lugs 41a,41b are shown, with the first internal rib 37a being located between the first and second lugs 41a,41b. The first lug 41 a limits rotational movement of the handle in the first (for example, closing) direction by interacting with the first internal rib 37a. The second lug 41b limits rotational movement of the handle 15,17 in a second (for example, opening) direction by interacting with the first internal rib 37a.

The lugs 41a,41b are positioned circumferentially such that the first rib 37a engages the first lug 41a at, or slightly before, the fully closed position of the valve 31, and such that the first rib 37a engages the second lug 41b at, or slightly before, the fully open position of the valve 31. When the internal rib 37a engages one of the lugs 41a,41b load is transferred from the handle 15,17 to the tap body 3 via the rib 37a and the respective lug 41a,41b, rather than the connection between the handle 15,17 and the second part of the valve 35. The arrangement prevents excessive force applied to the lever 21 from shearing the connection between the handle 17,15 and valve 31, and is therefore a more robust tap design.

Optionally, the housing 19 can include a second internal rib 37b. The first and second ribs 37a,37b are circumferentially spaced apart, and preferably are arranged substantially parallel to one another. The second internal rib 37b is arranged to engage the first lug 41 a to limit rotational movement in one of the first and second directions, and preferably the second direction. Thus, in the optional arrangement, there is provided a double mechanical blocking arrangement in one of the first and second directions, since both the first rib 37a - second lug 41b pair and second rib - first lug 41a pair provide mechanical blocking.

In this arrangement the circumferential spacing between the first and second internal ribs 37a,37b is substantially matched with the circumferential spacing between the first and second lugs 41a,41b.

At least one additional rib 37a,37b and/or at least one additional lug 41a,41b can be included to provide additional mechanical blocking for at least one of the first and second rotational directions. This makes the tap more robust.

A significant advantage of the invention is that each rib 37a,37b and each lug 41a,41b is located within the housing 19. This enables the ribs 37a,37b and lugs 41a,41b to have large contact surface areas, which spread the load better, and prevents the user from snagging his or her finger on any external components. Having the lugs located internally provides much greater flexibility for tap styling. A further advantage is that since the lugs are preferably machined into the tap body, they are very strong.

Typically each of the ribs 37a,37b is located on the same pitch circle. Typically each of the lugs 41a,41b is located on the same pitch circle. Preferably the or each rib 37a,37b is located on the same pitch circle as the or each lug 41a,41b.

It will be appreciated by the skilled person that modifications can be made to the above embodiments that fall within the scope of the invention, for example the tap can be in the form a single tap, which can be applied to a hot or cold water supply pipe. The tap can be in the form of a mixer tap having a single handle, which controls the blend of hot and cold water, from fully hot to fully cold, and controls the flow rate of the water.

The circumferential positions of the lugs 41a,41b and / or ribs 37a,37b can be varied appropriately for specific type of valve used.

Rather than having one rib 37a and two lugs 41a,41b for each handle 15,17, the tap 1 can include two internal ribs 37a,37b and one lug 41a, located between the ribs 37a,37b for each handle.

The embodiments described above, provide mechanical blocking in first and second rotational directions. If it is desired to provide mechanical blocking in only one rotational direction, the closing or opening direction, the tap can be provided with one rib 37a and one lug 41 a.

## Claims

1. A tap (1), including: a body (3) arranged for connection to at least one water supply pipe (9,11); a valve (31) including a first part (33), which is fixed to the body (3) and a second part (35) arranged for limited rotational movement with respect to the first part (33); and a handle (19) fixed for rotation with the second part (35) of the valve, said handle including a housing (19) mounted over at least a part of the valve (31), said housing (19) including first and second blocking members(37a,37b); and the body, and/or a part of the tap fixed to the body, includes third and fourth blocking members (41a,41b); wherein the first blocking member (37a)is arranged to engage with the third blocking member (41a) to limit rotational movement of the handle (19) in a first rotational direction; the first blocking member (37a) is arranged to engage the fourth blocking member (41b) to limit rotational movement of the handle (19) in the second rotational direction; the second blocking member (37b) is arranged to engage with one of the third and fourth blocking members (41a,41b) to limit rotational movement of the handle (19) in one of the first and second rotational directions; and wherein the first, second, third and fourth blocking members (37a,37b,41a,41b) are located within the housing (19).

2. A tap according to claim 1, wherein the handle (19) includes a lever portion (21) which protrudes outwardly from the housing (19).

3. A tap according to claim 1 or 2, wherein the first rotational direction is the valve closing direction; and the second rotational direction is the valve opening direction.

4. A tap according to any one of the preceding claims, wherein the first and second blocking members (37a,37b) are arranged along a pitch circle, and the first and second blocking members (37a,37b) are spaced apart circumferentially.

5. A tap according to any one of the preceding claims, wherein the third and fourth blocking members (41a,41b) are arranged along a pitch circle, and the blocking members (41a,41b)are spaced apart circumferentially.

6. A tap according to any one of the preceding claims, wherein the third blocking member (41a) is arranged to block further movement of the handle at, or just before, at least one of the valve's (31) fully open position and the valve's (31) fully closed position.

7. A tap according to any one of the preceding claims, wherein the fourth blocking member (41b) is arranged to block further movement of the handle at, or just before, at least one of the valve's (31) fully open position and the valve's (31) fully closed position.

8. A tap according to any one of the preceding claims, wherein the second blocking member (37b) is arranged to block further movement of the handle at, or just before, at least one of the valve's (31) fully open position and the valve's (31) fully closed position.

9. A tap according to any one of the preceding claims, wherein the blocking members (37a,37b,41a,41b) are arranged to allow the handle (19) to rotate through an angle of less than or equal to 180°, preferably less than or equal to 160°, more preferably less than or equal to 140°, more preferably still less than or equal to 120°, and more preferably still less than or equal to 100°.

10. A tap according to any one of the preceding claims, wherein the housing (19) includes at least one wall (23), and the or each housing blocking member (37a,37b) projects inwardly from the at least one wall (23).

11. A tap according to any one of the preceding claims, wherein the or each housing blocking member (37a,37b) is in the form of a protruding member, such as a rib.

12. A tap according to any one of the preceding claims, wherein the or each housing blocking member (37a,37b) is formed integrally with the handle housing.

13. A tap according to any one of the preceding claims, wherein the or each body blocking member (41a,41b) is in the form of an upstanding protrusion, such as a lug.

14. A tap according to any one of the preceding claims, wherein the tap (1) is in the form of a mixer tap.

15. A tap according to any one of the preceding claims, including a second valve (31), said second valve (31) having a first part fixed (33) to the body (3), a second part (35) that is arranged for limited rotational movement with respect to the first part (33), and a second handle (15).

16. A water supply system including at least one tap (1) according to any one of the preceding claims.
